# EUROPEAN PATENT APPLICATION

(11) **EP 3 837 977 A1**
(43) Date of publication of application: **23.06.2021**
(21) Application number: 19306691.7
(22) Date of filing: 19.12.2019
(51) Int. Cl.: A01N 43/16, A01N 65/00, A01N 65/03, A01P 15/00

(54) **USE OF ALGINATES OLIGOMERS TO IMPROVE PLANT PROTECTION AGAINST PATHOGENS**

(71) Applicant: Université de Bourgogne, 21000 Dijon (FR); Centre National de la Recherche Scientifique, 75016 Paris (FR); Institut national de recherche pour l'agriculture, l'alimentation et l'environnement, 75007 Paris (FR)
(72) Inventor: POINSSOT, Benoît, 21000 Dijon (FR); HÉLOIR, Marie-Claire, 21360 Auxant (FR); DAIRE, Xavier, 21000 Dijon (FR); DARBLADE, Benoît, 38920 Crolles (FR); LEMAITRE-GUILLIER, Christelle, 21310 Belleneuve (FR)
(74) Representative: Novagraaf Technologies

(57) **Abstract**

The invention concerns the use of alginate oligomers in sequence α(1-4)Guluronane and/or β(1-4)Mannuronane as an active ingredient of biocontrol products in plants, and that may be combined with another molecules such as phytohormones, against cryptogamic diseases of plants, in particular of vine (*Vitis vinifera),* or to protect other species against aggressors such as pathogenic microbes or insects.

## Description

### Technical field of the invention

The invention concerns the use of alginate oligomers in sequence α(1-4)Guluronane and/or β(1-4)Mannuronane as an active ingredient of biocontrol products in plants, and that may be combined with other molecules such as phytohormones, against cryptogamic diseases of plants, in particular of vine (*Vitis vinifera*), or to protect other species against aggressors such as pathogenic microbes.

The invention finds an application in the field of phyto-sanitary products, in agriculture.

In the description below, references in square brackets ([ ]) refer to the list of references at the end of the text.

### State of the art

In their environment, plants are confronted with aggressors such as pathogenic microorganisms including bacteria, fungi, oomycetes and virus or insect pests. They resist most of these aggressors by activating defense process (plant immunity concept). However, when this resistance is ineffective, the development of the aggressor alters the growth of the plant to the point of sometimes killing it, thus causing a significant decrease in the yield and/or quality of the crop.

Plant protection products traditionally used in crop protection against disease are problematic in terms of respect for the environment and the health of users and consumers. Measures have already been taken, as part of the Ecophyto plan, to reduce the use of these products. The development of crop protection methods that are more environmentally friendly and at lower risk for users and consumers is a major challenge. In this context, the protection of plants by biological molecules has already shown a real but limited potential for application. Some products are beginning to be registered but their effectiveness in fields is often partial.

The knowledge acquired on the innate immunity of plants has led to the use of elicitors, *i.e.* molecules that stimulate defenses, as a crop protection strategy against pathogens. There is a great diversity of biotic elicitors. They can be of plant, animal, fungal or bacterial origin and of various chemical nature (e.g. proteins, lipopeptides, oligosaccharides, etc.) (Ebel et Cosio, 1994) [1]. Oligosaccharide elicitors, such as β-glucans, chitin (or derivatives), pectins and oligogalacturonans (OG) have been particularly studied (Trouvelot et al., 2014) [2]. They differ in origin, structure and mechanism of action (Shibuya et Minami, 2001) [3]. Other polysaccharides can potentially be used as elicitors.

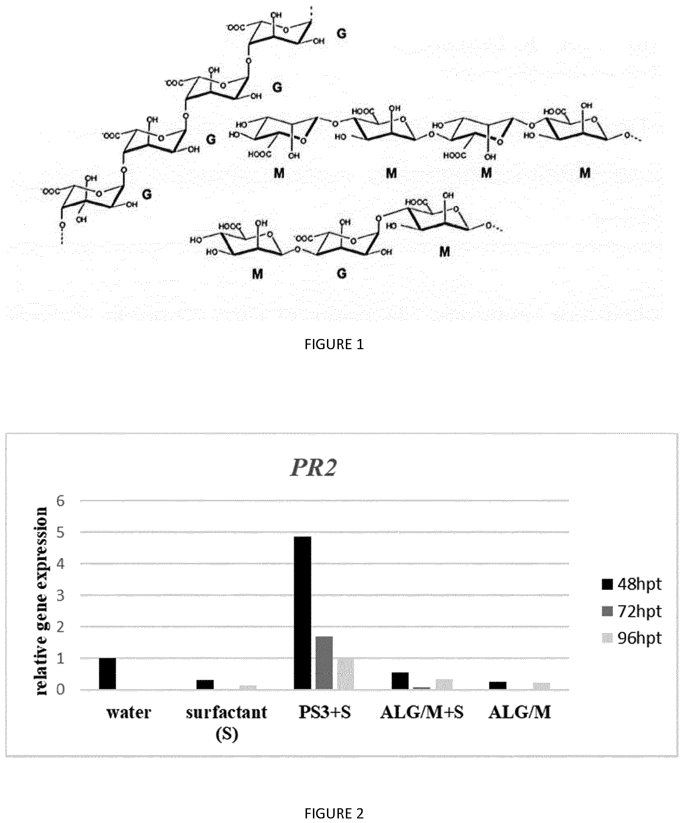

For example, alginates are polymers of biological origin derived from the cell wall of brown algae (Vera et al., 2011) [4] formed by two monomers linked together: mannuronate (or mannuronic acid, M) and guluronate (or guluronic acid, G) arranged in homopolymeric (G or M) or heteropolymeric (MG) blocks (Figure 1). The chemical composition of this wall may vary according to the different species of algae, and is subject to seasonal changes. Nevertheless, by selecting raw materials, it is possible to produce a variety of alginates with constant characteristics. Another advantage of these bio-polymers is that they are nowadays widely used in the food and cosmetic industries as thickeners, gelling agents, emulsifiers and stabilizers used in the composition of various industrial products (sauces, desserts, creams, etc...). They are therefore already approved and notably for use in food and human health. Their safety for humans is therefore no longer to be demonstrated. However, their role in agronomy still requires further study.

The Patent Application FR 2 795 289 [5] relates to 1,4 β-D-glucuronane polymers and/or glycuronic oligosaccharides in sequence β(1-4) having a degree of polymerisation (DP) lower than 30 derived thereof, which might activate defense and resistance reactions in plants against biotic and abiotic stresses, because of their ability to amplify the activity of 1,3 β-D-glucanase and/or 1,4 β-D-glucanase enzymes. However even if the exemplified 1,4 β-D-mannuronane and 1,4 β-D-guluronane oligomers with an average DP of 4 derived from alginate hydrolysis are capable to amplify activity of 1,3 β-D-glucanase, they do not amplify activity of 1,4 β-D-glucanase, in *Rubus* protoplasts. Furthermore, no real efficacy to protect plant against pathogenic microorganisms was demonstrated. In fact, it is well known in the art that glucanase activity is not always correlated with plant resistance against pathogens attacks (Aziz et al., 2004; Lee et al., 2005; Enkerli et al., 1993) [6-8] and can greatly vary upon stage of development or variety of a plant (Cota et al., 2007) [9].

The international Application WO 2013/038197 [10] relates to the use of alginate oligomers to enhance the efficacy of antifungal agents, in particular in the context of medical uses. However, in this case alginate oligomers are never used alone against plant pathogens attacks but for their capacity to synergize antifungal agents when used in combination therewith.

Therefore, identifying new molecules capable of protecting cultivated plants from pathogenic microorganisms is still a major challenge in agriculture.

### Description of the invention

To this end, the inventors characterized natural molecules derived from alginates with high phyto-protective activity under controlled conditions but that did not increase the expression of the *PR2* gene encoding 1,3 β-D-glucanase in the vine, unlike the positive PS3 control (Figure 2). The use of these alginate oligomers in sequence α(1-4)Guluronane and/or β(1-4)Mannuronane, in particular 1,4 β-D-mannuronane and/or 1,4 α-L-guluronane oligomers, provided protection for greenhouses or field crops (*e.g.* vine, *Vitis vinifera*) against cryptogamic diseases (possibly insect pests) and can thus reduce the use of phytosanitary products derived from chemical synthesis. The results of the greenhouse tests were very interesting because they showed that the alginate oligomers tested highly reduced the sporulation of *Plasmopara viticola* (agent of downy mildew) on the leaves of vine plants and provided a high phyto-protection (greater than 90%). The other results obtained in the vineyard against mildew are also very encouraging, while the formulation and use of these alginate oligomers can still be improved for example when used in combination with other molecules such as phytohormones. These alginate oligomers are therefore new biocontrol products for an organic market with high potential in sustainable/organic agriculture.

Thus the present invention relates to the use of alginate oligomers in sequence α(1-4)Guluronane and/or β(1-4)Mannuronane as an active ingredient, to enhance plant protection against pathogens.

According to a particular embodiment of the present invention, the alginate oligomers may be used in combination with another molecule such as a phytohormone. For example, phytohormone can be chosen from salicylate and its derivatives, in particular methyl salicylate and methyl glucose salicylate; jasmonate and its derivatives, in particular methyl jasmonate and jasmonate isoleucine; pipecolic acid; and beta amino butyric acid.

According to a particular embodiment of the present invention, the alginate oligomers have a degree of polymerisation (DP) higher than 15, preferably higher than 20, more preferably higher than 30.

According to a particular embodiment of the present invention, the alginate oligomers are 1,4 β-D-mannuronane and/or 1,4 α-L-guluronane oligomers.

According to a particular embodiment of the present invention, the pathogens are chosen from fungi, oomycetes, bacteria, virus, eventually insect pests. Preferably the oomycete *Plasmopara viticola.*

According to a particular embodiment of the present invention, the plant is vine.

### Brief description of the figures

Figure 1 represents the structures of alginates G, M and MagUg. Alg: homopolymeric block of guluronate (G); AIM: homopolymeric block of mannuronate (M); MagUg: heteropolymeric block of mannuronate (M) and guluronate (G).
Figure 2 represents the protection induced by alginate oligomers (used at different concentrations) against downy mildew of the vine (*Vitis vinifera*).
Figure 3 represents the expression level of the *PR2* gene encoding 1,3 β-D-glucanase in the vine under different conditions.

### EXAMPLES

### EXAMPLE 1: PROTECTION INDUCED BY ALGINATE OLIGOMERS AGAINST DOWNY MILDEW (P. VITICOLA) OF THE VINE (VITIS VINIFERA)

### 1. Plant material

Grapevine (*V. vinifera* cv. Marselan) herbaceous cuttings were grown in individual pots (10x7x7 cm) containing a mixture of peat and perlite (4:1, vol/vol) in a greenhouse at 25 ± 4 and 18 ± 7 °C (day and night, respectively) until they developed 6-8 leaves. Artificial illumination was supplemented when the natural light was less than 200 µmol. m.⁻² s⁻¹ during the 16h light period. Plants were watered with a fertilization solution (Topfert2 Plantin. France).

### 2. Treatment with alginates

Alginates (ALM, ALG, ALG/M from *Laminaria japonica*; ALB and MagUG from *Chorda filum*) were prepared at 0.5 to 5 mg.mL⁻¹ in distilled water with 0.05% surfactant and applied to both the upper and lower faces of leaves until the point of run-off using a manual sprayer. Plants were maintained in the greenhouse in the conditions described above. The sulphated laminarin PS3 (2.5 mg.mL⁻¹; positive control), water and the surfactant alone (negative controls) were sprayed in the same manner.

### 3. Plant inoculation and disease assessment

A *P. viticola* isolate was maintained in the greenhouse on cv. Marselan plants as previously described (Trouvelot et al., 2008) [13]. Sporangia were collected from sporulating leaves using a brush and suspended in distilled water at a concentration of 10⁴ sporangia.mL⁻¹. Inoculation was performed 48 hours after treatment with alginates by spraying the freshly prepared downy mildew suspension onto the lower face of the leaf. Plants were then placed overnight in a humid chamber (relative humidity of 100%), and then transferred back to the greenhouse, in the conditions described above. For mock-inoculation used as control, the leaf lower face was sprayed with water.

Briefly, 6 days after inoculation, leaf disks were punched out and placed with the abaxial side uppermost, on a moist Whatman paper, in a closed plastic box. This system was left overnight in darkness and saturated relative humidity to trigger sporulation. Disease intensity was assessed by measuring the leaf area covered by the pathogen sporulation using a "macro" developed for the image analysis Visilog 6.9 software (Noesis,France; Kim Khiook et al., 2013) [14] and the disease reduction rate is calculated as follows: (1- (treated sporulating area/control sporulating area)) x 100.Thirty disks from 3 plants were used per condition. At least three independent experiments were performed.

As shown in Figure 2, different types of alginates named ALM, ALG, ALG/M, ALB and MagUG used at different concentrations (from 0.5 to 5 mg.mL⁻¹) greatly reduce the sporulation of *P. viticola* on leaves of vine plants grown in greenhouses and thus confer a strong phyto-protection (about 90% for ALG and MagUG).

### EXAMPLE 2: PR2 GENE EXPRESSION ANALYSES BY qRT-PCR IN THE VINE (VITIS VINIFERA) TREATED BY ALGINATES G/M

Treated leaves from 3 plants per condition (water, surfactant S, PS3+S, ALGM+S, and ALG/M - treatment as described in example 1 above) were collected at different time points [48 hpt and at 24 and 48 h post-inoculation (hpi; *ie* 72 and 96 hpt respectively)] and immediately frozen in liquid nitrogen. Total RNA was extracted from 80 mg of fine ground leaves with Purelink ® Plant RNA Reagent (Ambion Life Technologies) according to the manufacturer's instructions, with an extra step with chloroform to obtain clear aqueous phase. DNA contaminations were removed with the DNA-freeTM DNA removal kit (Ambion Life Technologies) according to the manufacturers' instructions. The RNA yield and purity were determined by Nanodrop 2000 (Thermo Scientific), then checked on 1% agarose gel. Total RNA (1mg) was used to synthesize cDNA using Superscript IV reverse transcriptase kit (Invitrogen Life technologies). qRT-PCR experiments were performed using the AbsoluteTM qPCR Sybr Green ROX mix (Thermo Scientific) as previously described by Gamm et al. (2011)[11].

Relative gene expression was determined with the comparative cycle threshold (Ct) method (2^{-ΔΔCt}), where ΔΔCt = (Ct Gl [treated sample] - Ct Gl [control sample]) - (Ct RG [treated sample] - Ct RG [control sample]). Gl was the gene of interest *PR2,* and RG was the reference gene *EF1 γ* used as internal control for normalization (Dufour et al., 2013) [12]. Two independents experiments were performed.

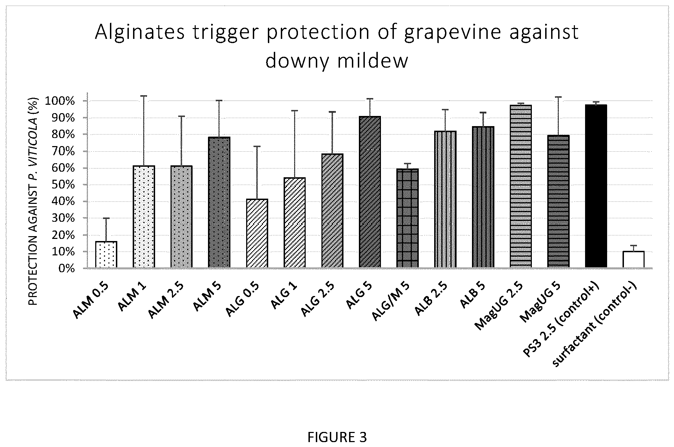

As shown in Figure 3, alginates did not increase the expression of the *PR2* gene encoding 1,3 β-D-glucanase in the vine, like the negative surfactant (S) and water controls and unlike the positive PS3 control.

### List of references

1. Ebel and Cosio, In International Review of Cytology - a Survey of Cell Biology, 148: 1-36, 1994
2. Trouvelot et al., Front. Plant Sci., 5: 592, 2014
3. Shibuya and Minami, Physiol. Mol. Plant Pathol., 59: 223-233, 2001
4. Vera et al., Mar. Drugs, 9 : 2514-2525, 2011
5. Patent Application FR 2 795 289
6. Aziz et al., Planta, 218: 767-774, 2004
7. Lee et al., J. Microbiol. Biotechnol., 15(5): 1073-1079, 2005
8. Enkerli et al.,Phys. Mol. Plant Pathol., 43: 161-171, 1993
9. Cota et al., Scientia Horticulturae, 112: 42-50, 2007
10. International Application WO 2013/038197
11. Gamm et al., Mol. Genet. Genomics, 285: 273-285 (doi: 10.1007/s00438-011-0607-60), 2011
12. Dufour et al., Plant Pathol., 62: 370-382 (doi: 10.1111/j.1365-3059.2012.02628.x), 2013
13. Trouvelot et al., Mol. Plant Microbe Interact., 21(2) : 232-243, 2008
14. Khiook et al., J. Microbiol. Methods, 95: 235-244 (doi: 10.1016/j.mimet.2013.08.012), 2013

## Claims

1. Use of alginate oligomers in sequence α(1-4)Guluronane and/or β(1-4)Mannuronane as active ingredient, to enhance plant protection against pathogens.

2. Use according to claim 1, wherein the alginate oligomers are combined with a phytohormone.

3. Use according to claim 2, wherein the phytohormone is chosen from salicylate and its derivatives, jasmonate and its derivatives, pipecolic acid, and beta amino butyric acid.

4. Use according to claim 3 wherein the phytohormone derivatives are chosen from methyl salicylate, methyl glucose salicylate, methyl jasmonate, and jasmonate isoleucine.

5. Use according to any one of claims 1 or 4, wherein the alginate oligomers have a DP higher than 15, preferably higher than 30.

6. Use according to any one of claims 1 to 5, wherein the alginate oligomers in sequence are 1,4 β-D-mannuronane and/or 1,4 α-L-guluronane oligomers.

7. Use according to any one of claims 1 to 6, wherein pathogens are chosen from fungi, oomycetes, bacteria, virus.

8. Use according to claim 7, wherein the oomycete is *Plasmopara viticola.*

9. Use according to any one of claims 1 to 8, wherein the plant is vine.
